# EUROPEAN PATENT SPECIFICATION

(11) **EP 2 172 700 B1**
(45) Date of publication and mention of the grant of the patent: **10.02.2016**
(21) Application number: 09163302.4
(22) Date of filing: 19.06.2009
(51) Int. Cl.: G02F 1/1335, F21V 8/00

(54) **Back light unit and image display device using the same**
Rücklichtbeleuchtungseinheit und Bildanzeigevorrichtung damit
Unité de rétroéclairage et dispositif d'affichage d'images l'utilisant

(30) Priority: 06.10.2008 KR 20080097738
(43) Date of publication of application: 07.04.2010
(73) Proprietor: Samsung Electronics Co., Ltd., Suwon-si, Gyeonggi-do, 443-742 (KR)
(72) Inventor: Yoo, Jun-mo, Seoul (KR); Cho, Kun-ho, Gyeonggi-do (KR)
(74) Representative: Appleyard Lees

(56) References cited:
- EP-A- 1 918 739
- JP-A- 2004 271 635
- US-A- 6 151 166
- US-A1- 2003 002 158

## Description

### BACKGROUND

### 1. Field of the Invention

The present general inventive concept relates to a back light unit and an image display device using the same, and more particularly to a back light unit that reflects light which is incident at about a 90° angle and lets light pass through which is incident at a generally acute angle received from a light source and an image display device using the same.

### 2. Description of the Related Art

Liquid Crystal Displays (LCDs) are light weight, slim, full-color, and are capable of supporting high definition resolution. On account of such advantages, the use of LCDs has been increasing. For instance, LCDs are being used for a variety of display devices, including desktop computers, laptop computers, PDAs, cell phones, and televisions.

Since LCDs do not emit light on their own, a light source like a back light unit is required. Generally, a back light unit comprises a plurality of lamps, a reflection plate which reflects light emitted from the lamps, and a diffuser plate and a diffuser sheet which are used to diffuse light evenly.

Currently, back light units deploy a diffuser plate and a diffuser sheet to reduce the Mura effect, and to adjust the distance between a lamp and a diffuser plate to set an optimum distance so that uniformity of light may be provided without causing the Mura effect.

In order to realize a slim back light unit, the distance between a lamp and a diffuser should be short. However, the shorter the distance is, the more the Mura effect occurs. This problem can be solved by adding lamps to the back light unit. However, adding lamps increases costs.

JP2004271635A discloses a light guide/light diffusing resin material that is free of anxiety about a decrease in property of resin, facilitates quality control, and enables the size, quantity, and distribution of air bubbles to easily be controlled. The light guide/light diffusing resin material is formed by pressurizing and introducing gas to the surface of a transparent resin forming and its circumference and then foaming the gas.

US-A-6151166 discloses a color image display device having a light source which emits an approximately parallel beam of light, a color separation element for separating this parallel beam into beams of light of different colors, a liquid crystal display panel having picture elements and a lens array for focusing the separated beams at corresponding ones of these picture elements. The color separation element is formed with a prism array having two diffraction gratings on both sides of it such that a beam of white light passing through it will be separated into beams of different colors and the angles between the optical axes of these beams of different colors will be greater as they leave the separation element than if this beam of white light passed through only one of these diffractions gratings. Either one or both of these diffraction gratings may be integrally formed respectively on one or both of the surfaces of the prism array.

US2003/002158 discloses a protective, diffusive film for use in a surface light source device provided with a lens film, said protective, diffusive film comprising: a transparent substrate layer; and a resin layer provided on the top surface and the under surface of the transparent substrate layer, the resin layers being free from fine particles and having fine concaves and convexes on the surface thereof, the difference in coverage between the resin layer provided on the top surface of the transparent substrate layer and the resin layer provided on the under surface of the transparent substrate layer being in the range of -20% to +20% in terms of the percentage of the coverage of one of the resin layers to the coverage of the other resin layer.

### SUMMARY

According to the present invention there is provided an image display device and a back light unit as set forth in the appended claims. Other features of the invention will be apparent from the dependent claims, and the description which follows.

The present general inventive concept provides a back light unit which reflects light which is incident at about a 90° angle and lets light pass through which is incident at a generally acute angle by forming alternating reflection patterns on a plate or plates near the light source, and an image display device thereof.

Additional features and utilities of the present general inventive concept will be set forth in part in the description which follows and, in part, will be obvious from the description, or may be learned by practice of the present general inventive concept.

Exemplary embodiments of the present inventive concept may be achieved by providing a back light unit, comprising: a light source; a plate disposed at a predetermined interval from the light source; characterised by further comprising: a first reflection pattern and a second reflection pattern disposed on respective sides of the plate to reflect light emitted from the light source having about a ninety degree angle of incidence to the plate, and to penetrate light emitted from the light source having an acute angle of incidence to the plate.

The first reflection pattern may include a plurality of first reflection units disposed on one side of the plate at predetermined intervals and the second reflection pattern may include a second reflection unit disposed on the other side of the plate without overlapping with the plurality of first reflection units.

The first reflection pattern may include a plurality of first reflection units disposed on one side of the plate at predetermined intervals and the second reflection pattern may include a second reflection unit disposed on the other side of the plate with part of the unit being overlapped with the plurality of the first reflection units.

The plate may be one of a diffuser plate and a diffuser sheet.

The image display device may further include a prism pattern sheet disposed on the opposite side of the plate from the light source.

The image display device may further include a lenticular pattern sheet disposed on the opposite side of the plate from the light source.

The light source may further include a plurality of light source parts, and the first reflection pattern and the second reflection pattern may be disposed at intervals determined according to an interval between the plurality of light source parts.

The image display device may further include a second plate disposed at a second interval from the light source such that the predetermined interval of the plate is less than the second predetermined interval.

Exemplary embodiments of the present general inventive concept may also be achieved by providing a light source; a first plate; and a second plate; charcterised by further comprising: a first reflection pattern is disposed on one side of the first plate; and a second reflection pattern is disposed on one side of the second plate; wherein the first reflection pattern and the second reflection pattern reflect light emitted from a light source having about a ninety degree angle of incidence to the first plate and the second plate, respectively, and to penetrate light emitted from the light source having an acute angle of incidence to the first plate and the second plate respectively.

The first reflection pattern may include a plurality of first reflection units disposed at predetermined intervals and the second reflection pattern may include a second reflection unit which does not overlap with the plurality of the first reflection units.

The first reflection pattern may include a plurality of first reflection units disposed on one side of the first plate at predetermined intervals and the second reflection pattern may include a second reflection unit, part of which overlaps with the plurality of the first reflection units.

The first plate may be a diffuser plate and the second plate may be a diffuser sheet.

The back light unit may further include a light source having a plurality of light source parts, wherein the first reflection pattern and the second reflection pattern are disposed at intervals according to an interval between the plurality of light source parts.

### BRIEF DESCRIPTION OF THE DRAWINGS

These and/or other features and utilities of the present general inventive concept will become apparent and more readily appreciated from the following description of the exemplary embodiments, taken in conjunction with the accompanying drawings of which:
FIG. 1 is a cross-sectional view illustrating a back light unit according to exemplary embodiments of the present general inventive concept;
FIG. 2 is a plane drawing illustrating a reflection pattern according to exemplary embodiments of the present general inventive concept illustrated in FIG. 1;
FIG. 3 is a cross-sectional view illustrating a back light unit according to exemplary embodiments of the present general inventive concept;
FIG. 4 a cross-sectional view illustrating a back light unit according to exemplary embodiments of the present general inventive concept; and
FIG. 5 a cross-sectional view illustrating a back light unit according to exemplary embodiments of the present general inventive concept.

### DETAILED DESCRIPTION OF THE EXEMPLARY EMBODIMENTS

Reference will now be made in detail to exemplary embodiments of the present general inventive concept, examples of which are illustrated in the accompanying drawings, wherein like reference numerals refer to the like elements throughout. The exemplary embodiments are described below in order to explain the present general inventive concept by referring to the figures.

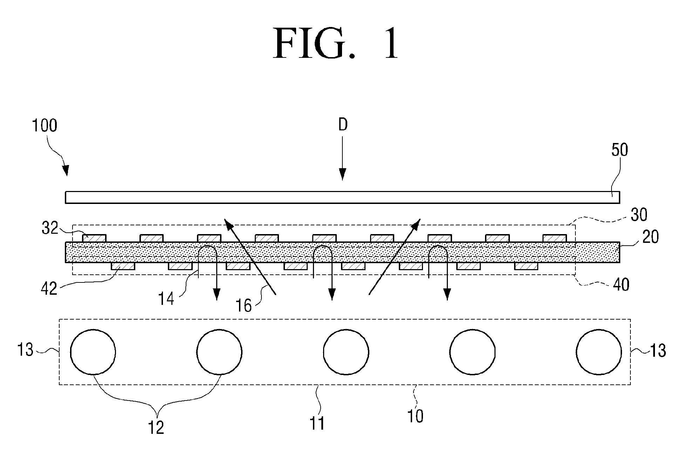

FIG. 1 is a cross-sectional view illustrating a back light unit 100 according to an exemplary embodiment of the present general inventive concept.

The back light unit 100 in FIG. 1 can be used in an image display device, and comprises a light source 10, a diffuser plate 20, a first reflection pattern 30, a second reflection pattern 40, and a diffuser sheet 50. The back light unit 100 may be used, for example, in an image display device which does not emit light without the back light unit 100 or other light source. In addition, the back light unit 100 may be used in an image display device with limited light emitting capacity so that the back light unit 100 can add to the light emitted in the image display device.

The light source 10 emits light and comprises a plurality of light source parts 12 which may be disposed at predetermined intervals. The light source 10 may be a Cold Cathode Fluorescent Lamp (CCFL), which is capable of emitting uniform white light. However, the type of light source is not limited, and various types of lamps may be used. Other light sources may include, for example, a light emitting diode (LED), an organic light emitting diode (OLED), and a laser light source.

The light emitted by the light source 10 can strike the diffuser plate 20 at various angles of incidence. For example, the light can be incident to the diffuser plate 20 at about a 90' angle 14, and it can also be incident to the diffuser plate 20 at a generally acute angle of incidence 16. The observed brightness of the light emitted from light source 10 may be greater toward the center 11 of the light source 10 as a result of the light having about a 90' angle of incidence 14 than at the sides 13 of the light source 10.

The diffuser plate 20 is a plate having a diffuser to diffuse light emitted by the light source 10. The diffuser plate 20 is generally a component disposed closest to the light source 10 among the several plates which together form the back light unit 100. If the first reflection pattern 30 and the second reflection pattern 40 are disposed on the diffuser plate 20, which is the closest component to the light source 10, the effectiveness of the first reflection pattern 30 and the second reflection pattern 40 can be maximized.

The first reflection pattern 30 and the second reflection pattern 40, disposed on respective sides of the diffuser plate 20, form a structure that reflects light having about a 90° angle of incidence 14 and lets light pass which has a generally acute angle of incidence 16 emitted by the light source 10. As the first reflection pattern 30 and the second reflection pattern 40 reflect light having about a 90° angle of incidence 14, the non-uniform brightness effect at the center of the light source 10 can be reduced. The first reflection pattern 30 and the second reflection pattern 40 may be made of a substance which has reflective properties.

The first reflection pattern 30 includes a plurality of first reflection units 32 disposed on one side of the diffuser plate 20 at predetermined intervals. The intervals between the first reflection units 32 may be determined by the intervals between the plurality of light source parts 12 in the light source 10.

The second reflection pattern 40 includes a plurality of second reflection units 42 disposed on another side of the diffuser plate 20 at predetermined intervals. The intervals between the second reflection units 42 may also be determined by the intervals between the plurality of light source parts 12 in light source 10.

If the width of the first reflection units 32 and the width of the second reflection units42 are substantially the same, the intervals between the first reflection units 32 and the intervals between the second reflection units 42 may also be substantially the same. Therefore, the second reflection units 42 can be disposed so as to correspond to the intervals between the first reflection units 32.

Although the width of the first reflection units32 and the width of the second reflection units42 are illustrated as substantially identical in FIG. 1, the width of the first reflection units32 and the width of the second reflection units42 may be different. If the width of the first reflection units32 and the width of the second reflection units42 are not the same, the intervals between the first reflection units 32 and the intervals between the second reflection units 42 may also be different.

For example, the first reflection pattern 30 may include a plurality of first reflection units 32 which are disposed on one side of the diffuser plate 20 at predetermined intervals, and the second reflection pattern 40 may include the second reflection units 42 which are disposed on the other side of the diffuser plate 20 so that the second reflection units 42 do not overlap with the plurality of first reflection units 32. The width of the second reflection units 42 may be the same as or less than the intervals between the first reflection units 32. Each of the second reflection units 42 may be disposed between the intervals of the plurality of the first reflection units 32.

As another example, the first reflection pattern 30 may include a plurality of first reflection units 32 disposed on one side of the diffuser plate 20 at predetermined intervals, and the second reflection pattern 40 may include the second reflection unit 42 disposed on the other side of the diffuser plate 20 so that at least one of the second reflection units may partially overlap with at least one of the first reflection units 32. In this case, the width of the second reflection units 42 may be greater than the intervals between the first reflection units 32. Also, the intervals between the second reflection units 42 may be set to be less than the intervals between the first reflection units 32.

The diffuser sheet 50 is a sheet having a diffuser to diffuse light emitted by the light source 10. The diffuser sheet 50 can be disposed at one side of the diffuser plate 20 while the light source is disposed on another side of the diffuser plate 20. In other words, if the diffuser plate 20 is disposed on one side of the light source 10, the diffuser sheet 50 may be disposed on the opposite side of the diffuser plate 20 from which the light source 10 is disposed.

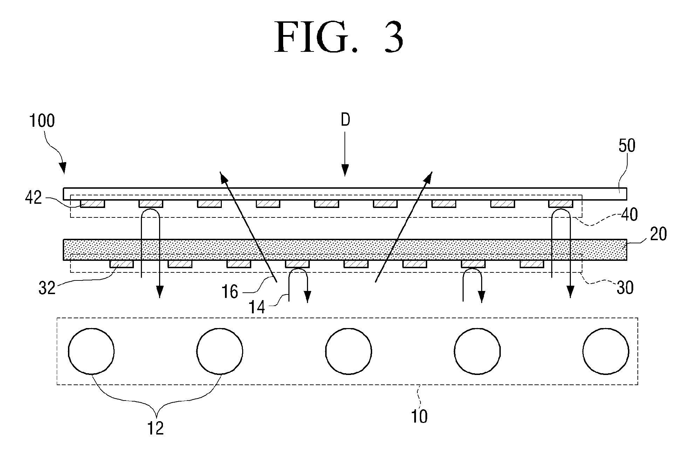

According to an exemplary embodiment of the present general inventive concept, the first reflection pattern 30 and the second reflection pattern 40 are disposed on the diffuser plate 20, which is the closest structure to the light source 10 among several plates which together form the back light unit 100. However, this is merely an example, and the first reflection pattern 30 and/or the second reflection pattern 40 may be disposed on the diffuser sheet 50, which can be disposed next to the diffuser plate 20, as illustrated in FIG. 3.

In an exemplary embodiment of the present general inventive concept, the first reflection pattern 30 and the second reflection pattern 40 are disposed on the diffuser sheet 20 since the structural effect of reflecting light having about a 90° angle of incidence and letting light pass having a generally acute angle of incidence can be maximized if the first reflection pattern 30 and the second reflection pattern 40 are disposed on the plate which is closest to the light source 10.

The back light unit 100 may generally further include a reflection plate (not illustrated) disposed on the opposite side of the light source 10 from the side at which the diffuser plate 20 is disposed, and a reflective polarizer, such as a Dual Brightness Enhance Film (DBEF) panel (not illustrated), disposed next to the diffuser plate 20 and/or the diffuser sheet 50 in order to enhance brightness. Since these features are widely known, a more detailed explanation thereof will not be provided.

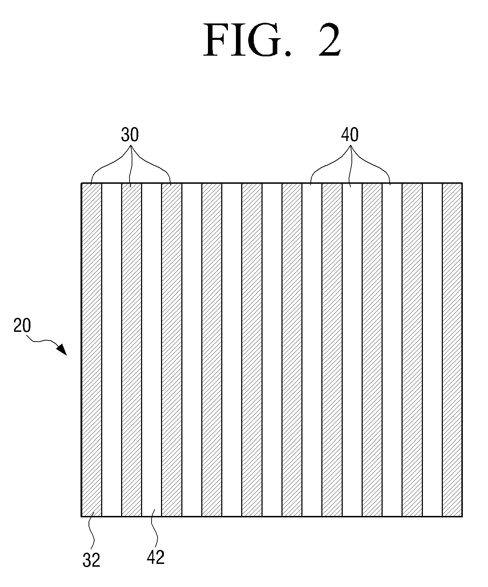

FIG. 2 is a plane drawing illustrating a reflection pattern according to another exemplary embodiment of the present general inventive concept.

As illustrated in FIG. 1, the first reflection pattern 30 can be disposed on one side of the diffuser plate 20 and the second reflection pattern 40 can be disposed on another side of the diffuser plate 20. The second reflection pattern 40 is illustrated as being disposed between the intervals of the first reflection pattern 30, that is, the second reflection pattern 40 is disposed where the first reflection pattern 30 is not disposed.

If the diffuser plate 20 on which the first reflection pattern 30 and the second reflection pattern 40 are disposed is viewed from above (i.e., from a direction D as illustrated in FIG. 1), the first reflection pattern 30 and the second reflection pattern 40 can be disposed so as to provide coverage across the entire surface of the diffuser plate 20, as illustrated in FIG. 2. In other words, the first reflection pattern 30 and the second reflection pattern 40 can be disposed such that light having about a 90° angle of incidence to diffuser plate 20 is reflected across the entire surface of the diffuser plate 20.

Among light emitted by the light source 10, light having about a 90° angle of incidence 14 is reflected by the first reflection pattern 30 or the second reflection pattern 40, and light having a generally acute angle of incidence can pass between the first reflection pattern 30 and the second reflection pattern 40 since the first reflection pattern 30 and the second reflection pattern 40 can be formed on the first side and the second side of the diffuser plate 20, respectively. FIG. 1 illustrates an exemplary structure in which light having about a 90° angle of incidence 14 is reflected and light having a generally acute angle of incidence passes through first reflection pattern 30 and second reflection pattern 40.

As illustrated FIG. 2, the first reflection pattern 30 and the second reflection pattern 40 can be formed so as to provide coverage across the entire surface of the diffuser plate 20, so the structure by which light having about a 90° angle of incidence is reflected and light having a generally acute angle passes through the diffuser plate 20 can be established regardless of the distance from the light source 10 to the diffuser plate 20.

Therefore, it is possible to implement a structure in which light having about a 90° angle of incidence is reflected and light having a generally acute angle of incidence passes through, among light emitting from the light source 10, without using a an expensive prism. Also, the Mura effect can be minimized by the first reflection pattern 30 and the second reflection pattern 40, which perform the same reflective function as a prism. Furthermore, since the distance between the light source 10 and the diffuser plate 20 can be minimized by using first and second reflection patterns 30 and 40, it is possible to manufacture a slim back light unit.

FIG. 3 is a cross-sectional view illustrating a back light unit according to another exemplary embodiment of the present general inventive concept.

In FIG. 1, both the first reflection pattern 30 and the second reflection pattern 40 are illustrated as being disposed on one plate close to the light source 10. However, in FIG. 3, the first reflection pattern 30 and the second reflection pattern 40 are illustrated as being disposed on two separate plates close to the light source 10. As FIG. 3 is similar to FIG. 1, the same reference numerals are used for the same elements, and a detailed explanation of certain elements will be omitted to avoid redundancy.

Referring to FIG. 3, the diffuser plate 20 is disposed at a first predetermined interval from the light source 10, and the diffuser sheet 50 is disposed at a second predetermined interval from the diffuser plate 20.

The first reflection pattern 30 having a plurality of first reflection units 32 is disposed at predetermined intervals on one side of the diffuser plate 20, and the second reflection pattern 40 having a plurality of second reflection units 42 is disposed at predetermined intervals on one side of the diffuser sheet 50.

As described with reference to FIG. 1, the first reflection units 32 and the second reflection units 42 may have the same width, or may have different widths.

As illustrated in FIG. 3, according to exemplary embodiments of the present general inventive concept, the first reflection pattern 30 can be disposed on a side of the diffuser plate 20 facing the light source 10 and the second reflection pattern 40 can be disposed on a side of the diffuser sheet 50 facing the diffuser plate 20. However, this is merely an example and the structure may vary. For example, the first reflection pattern 30 may be disposed on one side of the diffuser plate 20 facing away from light source 10, and the second reflection pattern 40 may be disposed on one side of the diffuser sheet 50 also facing away from the light source 10. In addition, the first reflection pattern 30 may be disposed on one side of the diffuser plate 20 facing the light source 10 and the second reflection pattern 40 may be disposed on one side of the diffuser sheet 50 facing away from the light source 10.

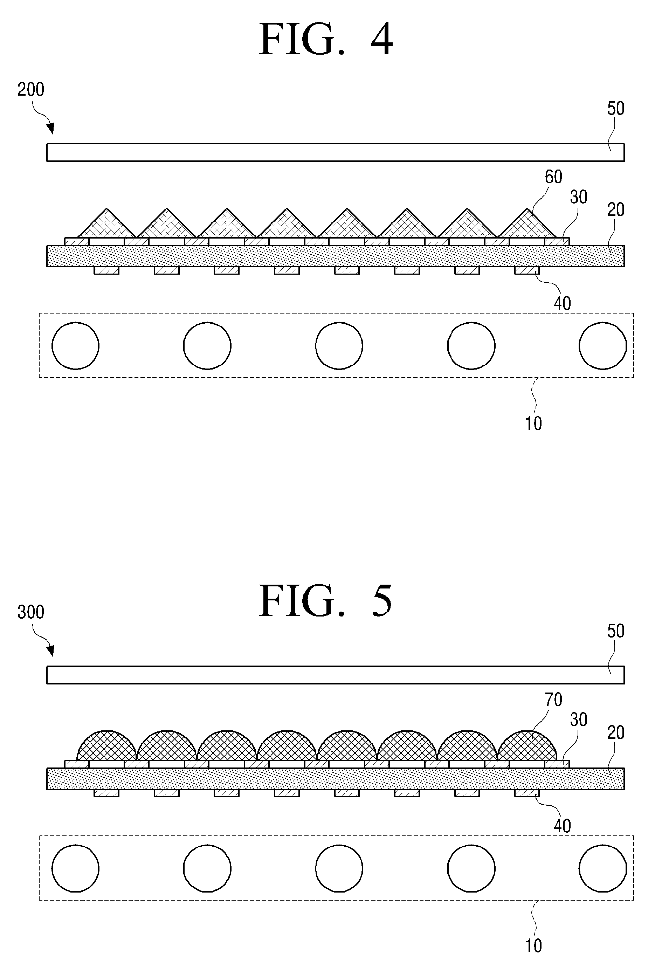

FIG. 4 is a cross-sectional view illustrating a back light unit according to another exemplary embodiment of the present general inventive concept.

In FIG. 4, a prism pattern sheet 60 is added to a back light unit 200 which comprises the light source 10, the diffuser plate 20 on which the first reflection pattern 30 and the second reflection pattern 40 are disposed, and the diffuser sheet 50.

The prism pattern sheet 60 is used to increase and/or enhance the brightness of the back light unit 200 by utilizing the characteristics of a prism which focuses light. However, while use of the prism pattern sheet 60 enhances the brightness of the back light unit 200, it also reduces a viewing angle at which a display using the back light unit 200 can be clearly viewed by a user.

FIG. 5 is a cross-sectional view illustrating a back light unit according to another exemplary embodiment of the present general inventive concept.

In FIG. 5, a lenticular pattern sheet 70 is added to back light unit 300 which comprises the light source 10, the diffuser plate 20 on which the first reflection pattern 30 and the second reflection pattern 40 are disposed, and the diffuser sheet 50.

The lenticular pattern sheet 70 is used to increase and/or enhance the brightness of the back light unit 300 by utilizing the characteristics of a lenticular pattern sheet, which focuses light. The lenticular pattern sheet 70 increases a viewing angle at which a display using the back light unit 300 can be clearly viewed by a user as compared to the viewing angle of a display device having the prism pattern sheet 60 illustrated in FIG. 4.

FIG. 4 and FIG. 5 illustrate exemplary embodiments in which a prism pattern sheet 60 or a lenticular pattern sheet 70, respectively, are added to the back light units 200 and 300, respectively, in which the first reflection pattern 30 and the second reflection pattern 40 are disposed on opposite sides of the diffuser plate 20. However, the prism pattern sheet 60 or lenticular pattern sheet 70 can also be added to a back light unit 200, 300 in which the first reflection pattern 30 and the second reflection pattern 40 are disposed on the diffuser plate 20 and the diffuser sheet 50 respectively, as illustrated in FIG. 3.

Although a few preferred embodiments have been shown and described, it will be appreciated by those skilled in the art that various changes and modifications might be made without departing from the scope of the invention, as defined in the appended claims.

## Claims

1. A back light unit (100), comprising:
a light source (10);
a plate (20,50) disposed at a predetermined interval from the light source (10);
**characterised by** further comprising:
a first reflection pattern (30) and a second reflection pattern (40) disposed on respective sides of the plate (20,50),
wherein the first reflection pattern (30) includes a plurality of first reflection units (32) disposed on one side of the plate (20,50) at predetermined intervals, and the second reflection pattern 40 includes a second reflection unit (42) disposed on the other side of the plate (20,50) without overlapping with the plurality of first reflection units (32).

2. The back light unit (100) of claim 1, wherein the first reflection pattern (30) and the second reflection pattern (40) reflect light emitted from the light source (10) having about a ninety degree angle of incidence to the sides of the plate (20,50), and allow penetration of light emitted from the light source (10) having an acute angle of incidence to the sides of the plate (20,50).

3. The back light unit (100) of claim 1 or 2, wherein the plate (20,50) is one of a diffuser plate (20) and a diffuser sheet (50).

4. The back light unit (100) according to any one of claims 1 to 3, further comprising:
a prism pattern sheet (60) disposed on the opposite side of the plate (20,50) from the light source (10).

5. The back light unit (100) according to any one of claims 1 to 4, further comprising:
a lenticular pattern sheet (70) disposed on the opposite side of the plate (20,50) from the light source (10).

6. The back light unit (100) according to any one of claims 1 to 5, wherein the light source (10) further comprises:
a plurality of light source parts, and the first reflection pattern (30) and the second reflection pattern (40) are disposed at intervals determined according to intervals between the plurality of light source parts.

7. The back light unit (100) according to any one of claims 1 to 6, further comprising:
a second plate (50) disposed at a second predetermined interval from the light source (10) such that the predetermined interval of the plate (50) is less than the second predetermined interval.

8. A back light unit (100), comprising:
a light source (10);
a first plate (20); and
a second plate (50);
**characterized by** further comprising:
a first reflection pattern (30) is disposed on one side of the first plate (20); and
a second reflection pattern (40) is disposed on one side of the second plate (50);
wherein the first reflection pattern (30) includes a plurality of first reflection units (32) disposed on one side of the plate (20,50) at predetermined intervals, and the second reflection pattern (42) includes a second reflection unit (42) disposed on the other side of the plate (20,50) without overlapping with the plurality of first reflection units (32).

9. The back light unit (100) of claim 8, wherein the first reflection pattern (30) and the second reflection pattern (40) reflect light emitted from the light source (10) having about a ninety degree angle of incidence to the sides of the plate (20,50), and allow penetration of light emitted from the light source (10) having an acute angle of incidence to the sides of the plate (20,50).

10. The back light unit (100) of claim 8 or 9 , wherein the first plate (20) is a diffuser plate (20) and the second plate (50) is a diffuser sheet (50).

11. The back light unit (100) according to any one of claims 8 to 10, further comprising:
a light source (10) having a plurality of light source parts, wherein the first reflection pattern (30) and the second reflection pattern (40) are disposed at intervals according to intervals between the plurality of light source parts.

12. An image display device comprising a back light unit (100) according to any preceding claim.

## Patentansprüche

1. Hintergrundbeleuchtungseinheit (100), die Folgendes umfasst:
eine Lichtquelle (10);
eine Platte (20, 50), die in einem vorher festgelegten Abstand von der Lichtquelle (10) angeordnet ist;
**dadurch gekennzeichnet, dass** sie ferner Folgendes umfasst:
ein erstes Reflexionsmuster (30) und ein zweites Reflexionsmuster (40), die auf den jeweiligen Seiten der Platte (20, 50) angeordnet sind,
wobei das erste Reflexionsmuster (30) mehrere erste Reflexionseinheiten (32) umfasst, die auf einer Seite der Platte (20, 50) in vorher festgelegten Abständen angeordnet sind, und wobei das zweite Reflexionsmuster (40) eine zweite Reflexionseinheit (42) umfasst, die auf der anderen Seite der Platte (20, 50) angeordnet ist, ohne mit den mehreren ersten Reflexionseinheiten (32) zu überlappen.

2. Hintergrundbeleuchtungseinheit (100) nach Anspruch 1, wobei das erste Reflexionsmuster (30) und das zweite Reflexionsmuster (40) Licht reflektieren, das von der Lichtquelle (10) emittiert wird, das einen Einfallswinkel von etwa neunzig Grad auf die Seiten der Platte (20, 50) aufweist, und einen Durchgang von Licht zulassen, das von der Lichtquelle (10) emittiert wird, das einen spitzen Einfallswinkel auf die Seiten der Platte (20, 50) hat.

3. Hintergrundbeleuchtungseinheit (100) nach Anspruch 1 oder 2, wobei die Platte (20, 50) eine Diffusorplatte (20) oder eine Diffusorfolie (50) ist.

4. Hintergrundbeleuchtungseinheit (100) nach einem der Ansprüche 1 bis 3, die ferner Folgendes umfasst:
eine Prismenmusterfolie (60), die an der gegenüberliegenden Seite der Platte (20, 50) von der Lichtquelle (10) angeordnet ist.

5. Hintergrundbeleuchtungseinheit (100) nach einem der Ansprüche 1 bis 4, die ferner Folgendes umfasst:
eine Linsenmusterfolie (70), die an der gegenüberliegenden Seite der Platte (20, 50) von der Lichtquelle (10) angeordnet ist.

6. Hintergrundbeleuchtungseinheit (100) nach einem der Ansprüche 1 bis 5, wobei die Lichtquelle (10) ferner Folgendes umfasst:
mehrere Lichtquellenbauteile, und wobei das erste Reflexionsmuster (30) und das zweite Reflexionsmuster (40) in Abständen angeordnet sind, die in Übereinstimmung mit Abständen zwischen den mehreren Lichtquellenbauteilen angeordnet sind.

7. Hintergrundbeleuchtungseinheit (100) nach einem der Ansprüche 1 bis 6, die ferner Folgendes umfasst:
eine zweite Platte (50), die in einem zweiten vorher festgelegten Abstand von der Lichtquelle (10) so angeordnet ist, dass der vorher festgelegte Abstand der Platte (50) kleiner als der zweite vorher festgelegte Abstand ist.

8. Hintergrundbeleuchtungseinheit (100), die Folgendes umfasst:
eine Lichtquelle (10);
eine erste Platte (20); und
eine zweite Platte (50);
**dadurch gekennzeichnet, dass** sie ferner Folgendes umfasst:
ein erstes Reflexionsmuster (30), das auf einer Seite der ersten Platte (20) angeordnet ist; und
ein zweites Reflexionsmuster (40), das auf einer Seite der zweiten Platte (50) angeordnet ist;
wobei das erste Reflexionsmuster (30) mehrere erste Reflexionseinheiten (32) umfasst, die auf einer Seite der Platte (20, 50) in vorher festgelegten Abständen angeordnet sind, und wobei das zweite Reflexionsmuster (40) eine zweite Reflexionseinheit (42) umfasst, die auf der anderen Seite der Platte (20, 50) angeordnet ist, ohne mit den mehreren ersten Reflexionseinheiten (32) zu überlappen.

9. Hintergrundbeleuchtungseinheit (100) nach Anspruch 8, wobei das erste Reflexionsmuster (30) und das zweite Reflexionsmuster (40) Licht reflektieren, das von der Lichtquelle (10) emittiert wird, das einen Einfallswinkel von etwa neunzig Grad auf die Seiten der Platte (20, 50) aufweist, und einen Durchgang von Licht zulassen, das von der Lichtquelle (10) emittiert wird, das einen spitzen Einfallswinkel auf die Seiten der Platte (20, 50) hat.

10. Hintergrundbeleuchtungseinheit (100) nach Anspruch 8 oder 9, wobei die erste Platte (20) eine Diffusorplatte (20) und die zweite Platte (50) eine Diffusorfolie (50) ist.

11. Hintergrundbeleuchtungseinheit (100) nach einem der Ansprüche 8 bis 10, die ferner Folgendes umfasst:
eine Lichtquelle (10), die mehrere Lichtquellenbauteile aufweist, wobei das erste Reflexionsmuster (30) und das zweite Reflexionsmuster (40) in Abständen in Übereinstimmung mit Abständen zwischen den mehreren Lichtquellenbauteilen angeordnet sind.

12. Bildanzeigevorrichtung, die eine Hintergrundbeleuchtungseinheit (100) nach einem der vorhergehenden Ansprüche umfasst.

## Revendications

1. Unité de rétroéclairage (100) comprenant :
une source de lumière (10) ;
une plaque (20, 50) disposée à un intervalle prédéterminé de la source de lumière (10) ;
**caractérisée en ce qu'**elle comprend en outre :
un premier motif de réflexion (30) et un second motif de réflexion (40) disposés sur les côtés respectifs de la plaque (20, 50),
où le premier motif de réflexion (30) comprend une pluralité de premières unités de réflexion (32) disposées sur un côté de la plaque (20, 50) à des intervalles prédéterminés, et le second motif de réflexion (40) comprend une seconde unité de réflexion (42) disposée sur l'autre côté de la plaque (20, 50) sans chevaucher la pluralité des premières unités de réflexion (32).

2. Unité de rétroéclairage (100) selon la revendication 1, dans laquelle le premier motif de réflexion (30) et le second motif de réflexion (40) réfléchissent la lumière émise depuis la source de lumière (10) ayant un angle d'incidence d'environ quatre-vingt-dix degrés sur les deux côtés de la plaque (20, 50), et permettent la pénétration de la lumière émise depuis la source de lumière (10) ayant un angle d'incidence aigu sur les côtés de la plaque (20, 50).

3. Unité de rétroéclairage (100) selon la revendication 1 ou la revendication 2, dans laquelle la plaque (20, 50) est une plaque parmi une plaque de diffuseur (20) et une feuille de diffuseur (50).

4. Unité de rétroéclairage (100) selon l'une quelconque des revendications 1 à 3, comprenant en outre :
une feuille de motif de prisme (60) disposée sur le côté opposé de la plaque (20, 50) par rapport à la source de lumière (10).

5. Unité de rétroéclairage (100) selon l'une quelconque des revendications 1 à 4, comprenant en outre :
une feuille de motif lenticulaire (70) disposée sur le côté opposé de la plaque (20, 50) par rapport à la source de lumière (10).

6. Unité de rétroéclairage (100) selon l'une quelconque des revendications 1 à 5, dans laquelle la source de lumière (10) comprend en outre :
une pluralité de parties de sources de lumière, et le premier motif de réflexion (30) et le second motif de réflexion (40) sont disposés à certains intervalles déterminés en fonction d'intervalles entre la pluralité de parties de sources de lumière.

7. Unité de rétroéclairage (100) selon l'une quelconque des revendications 1 à 6, comprenant en outre :
une seconde plaque (50) disposée à un second intervalle prédéterminé de la source de lumière (10) de manière à ce que l'intervalle prédéterminé de la plaque (50) soit inférieur au second intervalle prédéterminé.

8. Unité de rétroéclairage (100) comprenant :
une source de lumière (10) ;
une première plaque (20) ; et
une seconde plaque (50) ;
**caractérisée en ce qu'**elle comprend en outre :
un premier motif de réflexion (30) disposé sur un côté de la première plaque (20) ; et
un second motif de réflexion (40) disposé sur un côté de la seconde plaque (50) ;
où le premier motif de réflexion (30) comprend une pluralité de premières unités de réflexion (32) disposées sur un côté de la plaque (20, 50) à des intervalles prédéterminés, et le second motif de réflexion (40) comprend une seconde unité de réflexion (42) disposée sur l'autre côté de la plaque (20, 50) sans chevaucher la pluralité des premières unités de réflexion (32).

9. Unité de rétroéclairage (100) selon la revendication 8, dans laquelle le premier motif de réflexion (30) et le second motif de réflexion (40) réfléchissent la lumière émise depuis la source de lumière (10) ayant un angle d'incidence d'environ quatre-vingt-dix degrés sur les côtés de la plaque (20, 50), et permettent la pénétration de la lumière émise depuis la source de lumière (10) ayant un angle d'incidence aigu sur les côtés de la plaque (20, 50).

10. Unité de rétroéclairage (100) selon la revendication 8 ou la revendication 9, dans laquelle la première plaque (20) est une plaque de diffuseur (20) et la seconde plaque (50) est une feuille de diffuseur (50) .

11. Unité de rétroéclairage (100) selon l'une quelconque des revendications 8 à 10, comprenant en outre :
une source de lumière (10) ayant une pluralité de parties de sources de lumière, où le premier motif de réflexion (30) et le second motif de réflexion (40) sont disposés à certains intervalles en fonction d'intervalles entre la pluralité de parties de sources de lumière.

12. Dispositif d'affichage d'image comprenant une unité de rétroéclairage (100) selon l'une quelconque des revendications précédentes.
